**Europäisches Patentamt**

**European Patent Office**

**Office européen des brevets**

(19)

(11) Veröffentlichungsnummer: **0 026 309**
**A2**

(12) # EUROPÄISCHE PATENTANMELDUNG

(21) Anmeldenummer: 80104865.3

(22) Anmeldetag: 16.08.80

(51) Int. Cl.³: **C 08 J 5/04**
C 08 J 5/12, B 32 B 27/32

(30) Priorität: 28.09.79 DE 2939377
20.10.79 DE 2942520

(43) Veröffentlichungstag der Anmeldung:
08.04.81 Patentblatt 81/14

(84) Benannte Vertragsstaaten:
AT BE CH FR GB IT LI NL SE

(71) Anmelder: PAMPUS Vermögensverwaltungs-KG
Am Nordkanal 37-43
D-4156 Willich 3(DE)

(72) Erfinder: Teichmann, E. Dipl.-Ing.
Boverter Kirchweg 38
D-4005 Meerbusch 2(DE)

(74) Vertreter: Teichmann, Eberhard, Dipl.-Ing. et al,
Am Nordkanal 37-43
D-4156 Willich 3(DE)

(54) **Verfahren zur Kaschierung von Polytetrafluoräthylen-Formteilen mit Glasgewebe oder Mineralfaser-Gewebe und dafür bestimmtes Gewebe.**

(57) Verfahren zur Kaschierung von Polytetrafluoräthylen-Formteilen mit Glasgewebe oder Mineralfaser-Gewebe und dafür bestimmtes Gewebe

Polytetrafluoräthylen (PTFE) ist in der Verfahrenstechnik für die Auskleidung von Behältern u.ä. insbesondere gegen hochkorrossiven Angriff bekannt. Zur Verbesserung der Befestigung solcher Auskleidung auf einem Untergrund sollen die PTFE-Teile auf der zu verklebenden Fläche mit einem durch handelsübliche Verbindungswerkstoff benetzbaren Material kaschiert werden.

Dies wird erfindungsgemäß durch den Einsatz von thermoplastischen Fluorkunststoffen erreicht, die im schmelzflüssigen Zustand sowohl PTFE als auch Mineral fasern/Glasfasern benetzen. Zur Befestigung der Mineralfaser/Glasfaser-Gewebe dient entweder eine Zwischenschicht bestehend aus einem Gittergewebe von Fluorthermoplast-Fäden, -Bändchen oder -Streifen oder ein Mischgewebe aus den Letzteren und Glas- bzw. Mineralfasern. Durch entsprechende Gruppierung der verschiedenen Fasern im Mischgewebe werden Zonen erzielt, die ausschließlich aus Glasfasern/Mineralfasern oder thermoplastischem Fluorkunststoff-Material bestehen. Daraus resultiert bei der Verklebung ein unterschiedliche Haftung des so kaschierten PTFE-Materials auf dem Untergrund, die Wärmeausdehnungsspannungen kompensiert.

Fig 1

PAMPUS
Vermögensverwaltungs-KG
Am Nordkanal - Postfach 80
4156 Willich 3 - Schiefbahn

Verfahren zur Kaschierung von Polytetrafluoräthylen-Formteilen mit Glasgewebe oder Mineralfaser-Gewebe und dafür bestimmtes Gewebe

Auskleidungen mit dem Fluorkunststoff Polytetrafluoräthylen (PTFE) von Apparaten, Behältern, Rohrleitungen und ähnlichen Einrichtungen der Verfahrenstechnik sind seit langem Stand der Technik. Der Zweck solcher Auskleidungen liegt in der Nutzung der Korrosionsbeständigkeit oder der Unbenetzbarkeit oder auch des niedrigen Reibungsbeiwertes des Polytetrafluoräthylens (PTFE).

Die Befestigung der PTFE-Teile an den auszukleidenden Werkstücken bereitet Schwierigkeiten, da sich PTFE nicht durch übliche Verbindungswerkstoffe (Kleber) benetzen läßt und bei mechanischer Befestigung das PTFE durch seine niedrige Dauer-Druckstandfestigkeit, besonders unter Temperatur, zum Fließen neigt.

Durch Vorbehandlung der zu befestigenden Seite der PTFE-Auskleidung, z.B. durch Ätzen mit Erdalkalien oder durch elektrische Entladungen, die mikroskopisch kleine Ausbrennungen bewirken, kann PTFE zwar verklebbar gemacht werden, jedoch neigen die in dieser Weise vorbehandelten Flächen dazu, infolge der nur in molekularer Stärke behandelten Oberfläche ihre Benetzbarkeit allmählich einzubüßen.

Die Aufgabe der Erfindung ist es, eine andere Vorbehandlung von PTFE-Formteilen, vorwiegend Folien und Platten zu finden, die eine sichere Möglichkeit der Verbindung mit dem Untergrund zuläßt und deren Benetzbarkeit durch Verbindungswerkstoffe nicht zeitstandabhänig ist.

Für die Befestigung von Auskleidungen ist bei anderen Fluorkunststoffen, die ebenfalls schlecht oder gar nicht durch Verbindungswerkstoffe benetzbar sind, jedoch ein echtes thermoplastisches Verhalten aufweisen, das Einschmelzen eines Glasfasergewebe in die Oberfläche des Fluorkunststoffes als Haftgrundlage für einen Verbindungswerkstoff bereits bekannt, so werden entsprechend vorbehandelte Perfluoräthylen-Propylen (FEP) - Platten und Folien von Herstellern in den USA unter dem Handelsnamen ARMALON® angeboten. Durch die DE-OS 25 47 547 (entspricht GB-PS 1 485 688) ist ein Verfahren veröffentlicht, das die Einschmelzung von Glasgeweben in die äußere Oberfläche von Rohrleitungen aus Fluorkunststoffen zum Gegenstand hat. Schließlich wurde durch die US-PS 3 779 854 ein Verfahren geschützt, Glasgewebe in die Oberfläche von Polyvinylidenfluorid (PVDF) bzw. Polyvinyliden-Copolymeren einzuschmelzen und so verklebbare Substrate zu schaffen.

Die Folien- und Platten aus Fluorthermoplasten, die durch den vorbeschriebenen Stand der Technik als Auskleidungselemente benutzt werden können, sind jedoch bezüglich ihrer Wärmestandfestigkeit, Permeation und dem Herstellungspreis PTFE-Folien und Platten unterlegen.

Eine Verbindung von Glasfasern, Mineralfasern oder deren Gewebe mit PTFE ist wegen der bekannten fehlenden thermoplastischen Eigenschaften dieses Kunststoffes nicht möglich. PTFE wird auch nach Erreichen des Schmelzpunktes (Gelpunktes) bei 327° C nicht flüssig und es benetzt auch in Gelzustand Glas nicht. Aus der Kunststoff-Verfahrenstechnik ist jedoch bekannt, daß thermoplastische Kunststoffe, so Perfluoräthylen-Propylen (FEP) und Perfluoralkoxy (Perfluoralkyl-Perfluorvinyläther) (PFA), PTFE in thermoplastisch flüssigem Zustand gut benetzen und in diesem Zustand ebenfalls Glasfasern/Glasfäden einzuschmelzen in der Lage sind.

Seit kurzem sind Gewebe aus monofilen FEP-Drähten (Monofilament-Gewebe) auf dem Markt, Gewebe aus gleichen PFA-Drähten befinden sich bei den Herstellern in der Entwicklung bzw. in der Versuchserprobung.

Die Erfindung bringt die Lösung der Aufgabe, PTFE-Formteile sicher und nicht zeitstandabhängig mit dem Untergrund verbindbar zu machen dadurch, daß ein Gewebe aus thermoplastischen Fluorkunststoffdrähten (Monofilament-Gewebe), so beispielsweise aus FEP oder PFA thermisch mit dem PTFE-Teil durch Aufpressen unter gleichzeitiger Hitzeeinwirkung verbunden/verschweißt wird und dieses Gewebe aus Fluorthermoplasten seinerseits wieder Glasfasern, Mineralfasern oder deren Gewebe fest bindet. Mit Hilfe einer so befestigten Gewebematte kann das PTFE-Formteil auf üblichem Wege durch Verbindungs-

werkstoffe auf dem Untergrund befestigt werden. Vorteilhaft wird das Glas- oder Mineralfasermaterial gleichzeitig mit dem Gewebe aus thermoplastischen Fluorkunststoffen durch Hitze und Druckeinwirkung auf das PTFE aufgebracht.

Die Herstellung von dünnen Drähten oder zur Herstellung von Geweben verwendungsfähiger Fasern aus thermoplastischen Fluorkunststoffen bereitet jedoch wegen der hohen Schmelzviskositäten dieser Materialien Schwierigkeiten. Der Preis monofiler Fäden liegt deshalb hoch, zumal diese Fäden nur für engbegrenzte Verwendungszwecke eingesetzt werden.

Die Lösung der Aufgabe sieht alternativ vor, ein Haftvermittlungsgewebe zu verwenden, das aus Streifen von Fluorthermoplast-Folien (anstatt aus Fluorthermoplast-Fäden) besteht. Fluorthermoplast-Folien, beispielsweise aus FEP oder PFA, werden für andere Einsatzzwecke sowieso hergestellt. Es bereitet keine sonderlichen Schwierigkeiten, sie mit geeigneten Vorrichtungen in schmale Streifen zu zerschneiden. Diese Streifen werden entweder in gezwirntem/gedrilltem Zustand oder aber als glatte Bändchen bei der Herstellung von Geweben benutzt.

Eine besonders vorteilhafte Ausführung sieht vor, die thermoplastischen Fluorkunststoff-Drähte oder -Streifen mit Glasfasern, Mineralfasern oder Faserbündeln zu einem Mischgewebe zu verarbeiten, das beispielsweise zur Hälfte oder zu einem Drittel Fluorthermoplastfäden bzw. Streifen enthält. Durch eine entsprechende Heizbehandlung unter Presse oder Kalander wird dieses Mischgewebe aus Glasgewebefäden und Thermoplastfäden, -bändchen oder -streifen mit Hilfe der Letzteren auf PTFE-Platten oder Folien aufgeschmolzen. So wird eine besonders günstige und nicht zu dicke Verbindungsschicht erreicht, wodurch auch der Verbrauch an Verbindungswerkstoffen (Klebstoffen) niedrig gehalten wird.

Aus Haftungs- und auch aus Kostengründen ist es zweckmäßig, bei der Herstellung der Mischgewebe den Fluorthermoplastfadenstreifen-Anteil so klein zu halten, daß er für eine gute Haftung bei der Anschmelzung des Gewebes an das PTFE gerade noch ausreicht. Dadurch wird gleichzeitig erreicht, daß der Anteil der durch den Verbindungswerkstoff benetzbaren Glasfäden zur Befestigung auf der Unterlage möglichst groß ist.

Wenn das Mischgewebe in seinen Kettfäden und Schußfäden abschnittsweise entweder aus Mineralfaser- oder Glasfaser-Fäden oder aus Fluorthermoplastdrähten, -bändchen oder -streifen besteht, ist es ferner möglich, dadurch eine zonenweise Belegung der PTFE-Formteile mit nur aus Glas oder nur aus Kunststoffthermoplasten bestehenden Draht- bzw. Faserkreuzungsbereichen zu erzielen, sodaß beispielsweise bei schachbrettförmiger Anordnung die Glasfaserfäden in der nächsten Zone durch die geschmolzenen Fluorthermoplaste gehalten werden. Es ist dadurch ferner möglich, bei PTFE-Auskleidungsfolien oder -Platten diese nur streifen- oder schachbrettweise mit dem Untergrund zur Verklebung zu bringen, um die unterschiedliche Wärmeausdehnung der PTFE-Teile zum Untergrund, beispielsweise aus Metall, zu kompensieren. Diese zonen - oder schachbrettartige Verklebung zur Vermeidung von Spannungen in der Verbindung zwischen Auskleidung und Untergrund ist bereits aus den DE-GM 72 20 884 und 76 08 976 bekannt, sie sollte allerdings in diesen Schutzrechten auf andere Weise erreicht werden. Bei der vorliegenden Lösung ist gegenüber diesem Stande der Technik keine besondere Verfahrensweise bei der Verbindung der PTFE-Teile mit dem Untergrund erforderlich, da in gewissen Zonen nur guthaftendes Glasgewebe und in anderen Zonen ausschließlich aufgeschmolzenes Gewebe aus Fluorthermoplast-Material, das seinerseits für Verkleber nicht benetzbar ist, vorliegt.

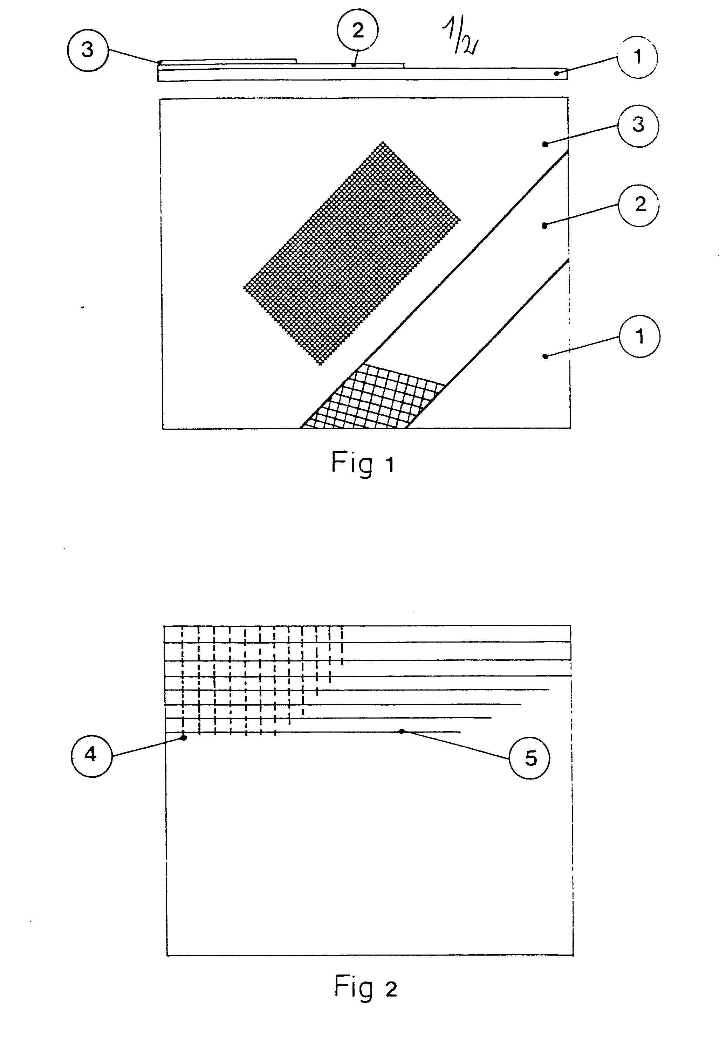

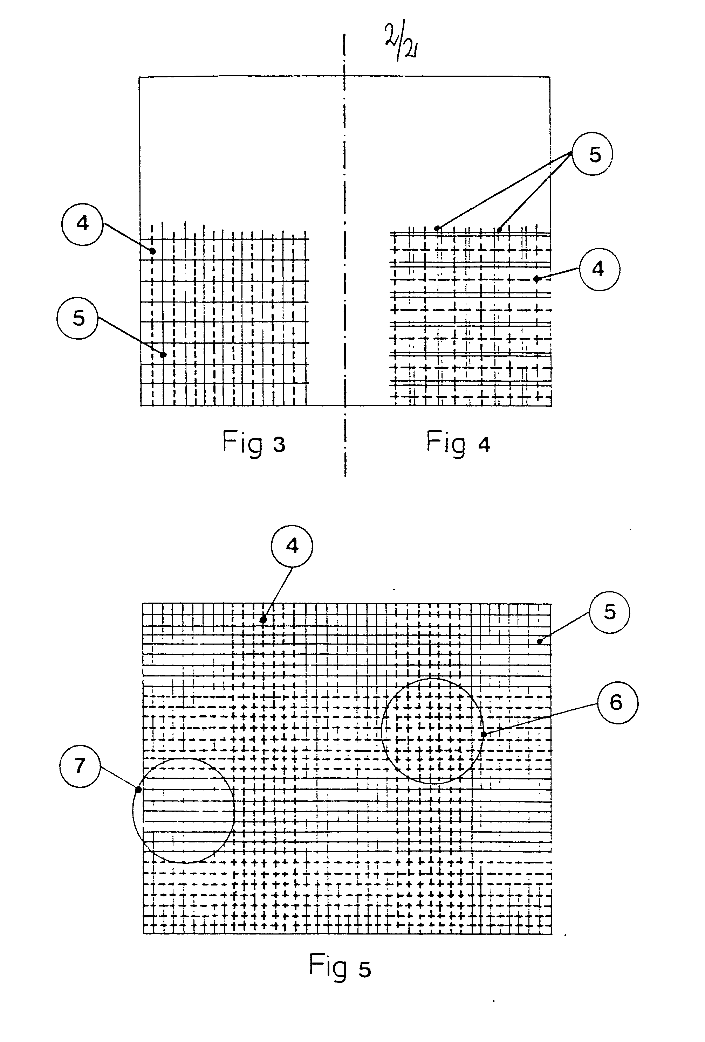

Der Gegenstand der Erfindung wird in den Ausführungsbeispielen der Abbildungen 1 - 5 dargestellt.

Das zu befestigende PTFE-Formteil, vorwiegend in Form einer Folie oder Platte, ist mit (1) bezeichnet. Ein Gewebe aus thermoplastischen Fluorkunststoffäden, -streifen oder -bändchen (2), so beispielsweise aus FEP oder PFA, liegt als Haftverbindungsschicht auf der Folie/Platte (1). Eine Gewebematte oder Faserflies (3) aus Glasfaser- oder Mineralfasern bildet die oberste durch einen Verbindungswerkstoff benetzbare Schicht. Unter Druck und Temperatur sind die beiden Auflagen (2) und (3) mit der PTFE-Folie/Platte (1) verschweißt.

Die beiden für die Verbindung auf die PTFE-Grundlage aufgebrachten Gewebeschichten/Fliesschichten können auch zu einem Mischgewebe oder Flies aus entsprechenden Fadensträgen vereinigt sein. In Abb. 2 ist eine Auflage aus einem solchen Mischgewebe dargestellt. Mit (5) sind Fluorthermoplast-Fäden, -Streifen oder -Bändchen, beispielsweise aus FEP oder PFA, bezeichnet, während die Glasfaser- oder Mineralfaser-Fäden mit (4) bekennzeichnet sind. Aus den Abb. 3 und 4 ist ersichtlich, daß durch unterschiedliche Anordnung der Fluorthermoplast-Fäden oder -Bändchen (5) bzw. Glasfaser/Mineralfaser-Fäden (4) in Kette und Schuß des Gewebes Mischgewebe mit einem definierten Anteil von Fluorthermoplasten gebildet werden, der gerade ausreichend für eine gute Verbindung der Mineralstoffäden mit der PTFE-Grundlage ist.

Abb. 5 zeigt Mischgewebe mit besonderer Anordnung der Fluorthermoplast-Fäden oder -Bändchen (5) bzw. der Glasfaser/Mineralfaser-Fäden (4). Durch abschnittweise Verwendung in den Kettbzw. Schußfäden des Mischgewebes oder Gewirkes wird eine Gewebestruktur erreicht, die zonenweise ausschließlich aus Fluorthermoplast-Fäden, -Bändchen oder -Streifen oder Glasfaser/Mineralfaser-Fäden besteht. Die nur aus Mineralfaser-Fäden bestehenden Zonen (6) stellen eine besonders gute Haftgrundlage dar, während die nur mit Fluorthermoplast-Material, das an das PTFE angeschmolzen ist, bedeckten Zonen (7) keine Verbindung mit einem Kleber eingehen. Infolge dessen ist eine Verklebung zwischen PTFE-Auskleidungsformteil und Unterlage nur zonengebunden vorhanden.

Die vorstehend beschriebene Erfindung löst die Verbindungsprobleme zwischen PTFE und dem Untergrund, beispielsweise bei auszukleidenen Behältern, die seit langem ein bekanntes verfahrenstechnisches Problem darstellen. Darüber hinaus wurde ein neues Verfahren zur zonenweisen Verbindung mit dem Untergrund beschrieben, das die Unterschiede in der Wärmeausdehnung zwischen Auskleidung und Untergrund kompensiert.

PATENTANSPRÜCHE

1. Verfahren zur Behandlung von PTFE-Formteilen, vorwiegend Folien und Platten, zur Befestigung auf einem andersartigen Untergrund mittels flüssigen oder pastenförmigen Verbindungswerkstoffen dadurch gekennzeichnet, daß ein Gewebe oder Gewirke von Glasfaserfäden, Mineralfaserfäden oder Fadenbündeln dieser Stoffe mit Hilfe einer Zwischenschicht bestehend aus einem Gewebe von Fluorthermoplastfäden, -streifen oder gedrillten Bändchen auf das PTFE-Formteil aufgeschmolzen wird.

2. Verfahren nach Anspruch 1 dadurch gekennzeichnet, daß das Aufschmelzen in an sich bekannter Weise durch druck- und temperaturabhänigig gesteuerte Pressen oder Kalander vorgenommen wird.

3. Haftvermittlungsgewebe zur Durchführung des Verfahrens nach Ansprüchen 1 und 2 dadurch gekennzeichnet, daß das Gewebe ein Mischgewebe aus Mineralfaser- oder Glasfaserfäden und Fluorthermoplast-Fäden oder -Bändchen, die auch gezwirnt oder verdrillt sein können, ist.

4. Haftvermittlungsgewebe nach Anspruch 3 dadurch gekennzeichnet, das das Mischgewebe aus Mineralfaser- oder Glasfaserfäden und Fluorthermoplast-Fäden oder -Bändchen besteht, bei dem die Kett- und Schußfäden/bändchen so angeordnet sind, daß ein Streifen- oder Schachbrettmuster gebildet wird, bei dem einzelne Felder oder Streifen entweder aus Mineralfaser- oder Glasfaserfäden oder nur aus Fluorthermoplast-Fäden bzw. -Bändchen bestehen.

1/2

Fig 1

Fig 2

Fig 3 Fig 4

Fig 5